# EUROPEAN PATENT SPECIFICATION

(11) **EP 1 061 624 B1**
(45) Date of publication and mention of the grant of the patent: **11.08.2010**
(21) Application number: 99830377.0
(22) Date of filing: 17.06.1999
(51) Int. Cl.: H02G 3/14, H02G 3/08

(54) **Electric junction box**
Elektrisches Verbindungsgehäuse
Boîtier électrique de jonction

(43) Date of publication of application: 20.12.2000
(73) Proprietor: Marlanvil S.p.a., 20159 Milano (IT)
(72) Inventor: Daluiso, Salvatore, 20159 Milano (IT)
(74) Representative: Tansini, Elio Fabrizio

(56) References cited:
- EP-A- 0 899 843
- DE-U- 7 833 886
- FR-A- 2 689 331

## Description

The present invention relates to an electric junction box of the type comprising the characteristics expressed in the preamble to claim 1.

As is well known, electric junction boxes exist for outdoor use, i.e. suitably protected against the action of various atmospheric agents, which must in particular guarantee an effective protection of the electric components situated therein against possible infiltrations of fluids.

Such electric junction boxes normally comprise a box body presenting a housing compartment able to receive terminations of electrical conductors.

The box body presents an access opening able to allow a user to perform, with sufficient space, the necessary electrical connections within the housing compartment. The access opening is shut by means of a cover removably engageable to the box body. Generally, through openings are also provided, obtained in the walls of the box body to allow the terminations of conductor elements to access from various positions to the interior of the housing van. In correspondence with each through opening is removably engaged a sealing element, usually called "fairlead" made of elastomeric material, able to exert a hermetic seal on a cable or on a pipe for the containment of the cable itself engaged through the opening.

Known junction boxes are further provided with a gasket interposed between the box body and the cover to prevent fluids from penetrating into the housing compartment through the junction areas between such elements.

Junction boxes lastly comprise closure means able to fasten the cover with respect to the box body. Such closure means can comprise pressure fastening means or screw-on fastening means.

Pressure fastening means provide for the presence of appropriate projections obtained both on the box body and on the cover. The junction box is closed by setting the cover down on the box body in correspondence with its access opening and pushing the cover towards the box body itself. The thrusting action on the part of the user causes the pressure fastening means to snap, thereby shutting the junction box.

Junction boxes fitted with screw-on fastening means present, in the housing compartment and in the lower portion of the cover, screw seats engageable by respective threaded elements able to fasten the cover to the box body.

The Applicant has observed that known electric junction boxes present some drawbacks.

In particular, boxes equipped with pressure fastening means do not always guarantee an effective closure, that is to say a good adhesion of the cover to the box body. Between the cover and the box body, gaps may be formed through which fluids may infiltrate into the box body, thereby causing damage to the electrical components.

It has further been observed that when they are applied to walls or other supports that are not perfectly planar, such boxes tend to deform, thereby altering the profile of the access opening whereon the cover is engaged. In this condition, closing the box is difficult, since the cover has, in its coupling area, a different profile from the one assumed by the coupling area of the box body. The incongruity between the profiles of the cover and of the box body at times makes it impossible to obtain the stable engagement of one on the other or in any case forces the user to spend a longer installation time with respect to the time he would employ under normal conditions, without however having the certainty that the cover will remain perfectly engaged to the box body. The cover is in fact easily prone to separate from the box body, thereby causing the box to open.

Unlike the aforementioned boxes, those equipped with screw-on fastening means assure an effective closure of the cover with respect to the box body even when the latter must be applied to non-planar supports.

However, it should be noted that such a closure determines rather long installation times since the user must perform numerous operations to position the screws in their respective seats and, subsequently, to tighten them one after the other. Moreover, each screw seat potentially constitutes a fluid infiltration area.

Lastly, it should be noted that both types of boxes described present a high number of components which increase both the costs of manufacturing the boxes and the time required for a user to install them.

Document DE7833886U and EP0899843 disclose each a box provided with both pressure fastening means and screw-on fastening means, in order to maintain the cover engaged to the box body.

The main aim of the present invention therefore is to realise an electric junction box that offers a greater employment flexibility and guarantees an optimal hermetic closure under all circumstances.

A further purpose of the invention is to simplify the structure of the box, lowering manufacturing costs and consequently reducing the time required for installation by users.

These aims and others besides which will appear in the description that follows are attained, in accordance with the present invention, by an electric junction box, comprising the characteristics expressed in the characterising part of claim 1.

The advantages shall be made more readily apparent from the detailed description that follows. Preferred, embodiments of the present invention are defined in the dependent claims.

The description shall be made below with reference to the accompanying drawings, provided purely by way of non limiting indication, wherein:
- Figure 1 is a partially interrupted top view of an electric junction box according to the present invention;
- Figure 2 is a section of the junction box, taken according to trace II-II of Figure 1. With reference to the mentioned figures, the number 1 indicates in its entirety an electric junction box according to the present invention.

The junction box 1 comprises a box body 2 destined to be applied to walls, infrastructures, or other supports.

The box body 2 comprises a bottom wall 3 wherefrom extend peripherally and perpendicularly lateral walls 4 which define, with the bottom wall 3, a housing compartment 5 able to receive terminations of electrical conductors and/or other electrical elements.

The box body 2 further presents an access opening 6 defined along the terminal edges 7 of the lateral walls 4. Through the access opening 6 it is possible to operate inside the box body 2, to arrange and install the electrical conductors and/or other components. The box 1 further comprises a cover 8 removably engageable to the box body 2 in correspondence with the access opening 6 to close the housing compartment 5.

The cover 8 presents a cap 9 wherefrom a peripheral border 10 extends perpendicularly, which border 10, when the cover 8 closes the housing compartment 5, engages the terminal edges 7 of the lateral walls 4.

Furthermore, the box 1 comprises closure means 11 operating between the box body 2 and the cover 8 to fasten them with respect to one other.

In detail, the closure means 11 comprise pressure fastening means 12 and screw-on fastening means 13 to maintain the cover 8 engaged to the box body 2.

Preferably, the pressure fastening means 12 provide for the presence of one or more projections 14 that protrude externally from the lateral walls 4 of the box body 2 and extend parallel to the terminal edges 7 of the lateral walls themselves. Each projection 14 is able to interact by mechanical interference with an overhang 15 protruding internally from the peripheral border 10 of the cover 8, to determine the snap-on closure of the cover 8 on the box body 2.

In particular, the overhang 15 is parallel to the peripheral border 10 and can for instance develop along the entire inner surface of the lateral border itself or it can be realised in various segments situated on the same plane.

The screw-on fastening means 13 provide for one or more cylindrical projections 16 to project from a lower surface of the cap 9, oriented internally to the compartment 5, terminally to said projections 16 being defined striking surfaces 17 oriented opposite to the cap itself.

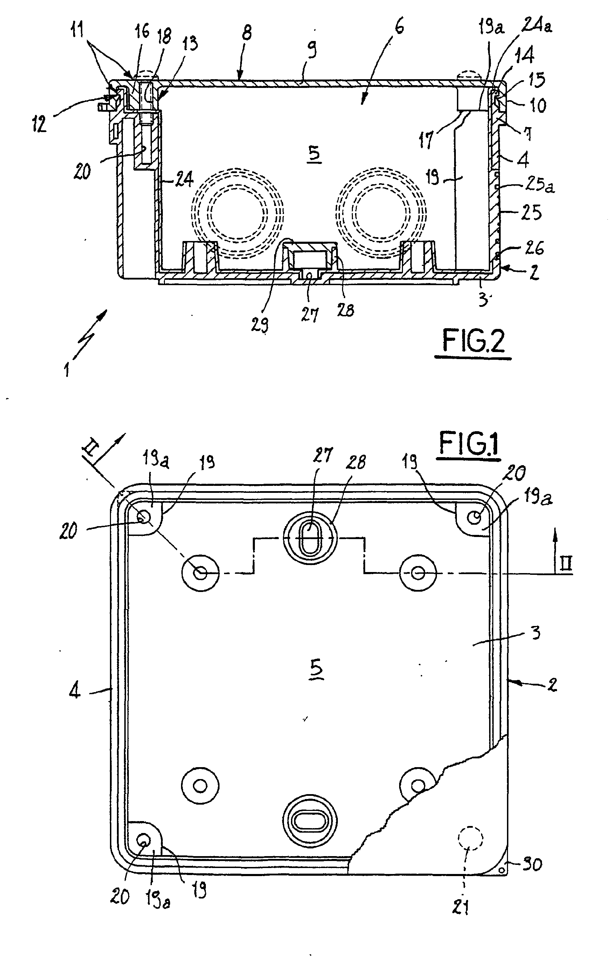

Each of the cylindrical projections 16, situated in correspondence with the four angles defined by the lateral walls 4, is axially traversed by an engagement hole 18 destined to receive a respective threaded element, shown in dashed lines in Figure 2.

To each of the cylindrical projections 16 is combined at least an attachment block 19 positioned in the housing compartment 5 and presenting at least a bearing surface 19a in correspondence whereto is obtained at least a screw hole 20. When the cover 8 is fastened on the box body 2, each engagement hole 18 is aligned with the screw hole 20 of the respective attachment block 19 present in the housing compartment 5, and each striking surface 17 is positioned against the respective bearing surface 19a.

Alternatively to the above description, the engagement holes 18 can be obtained directly on the lower surface of the cap 9 of the cover 8 if the latter has sufficient thickness.

In correspondence with each engagement hole 18 the cover 8 presents at least a frangible portion 21, extending in a relationship of superficial continuity with the cap 9. Each frangible portion 21 occludes the respective engagement hole 18 to assure a continuous external surface of the cover, when the screw-on fastening means are not used.

The frangible portions 21 are suitable to be penetrated by the respective threaded elements when the latter are inserted through the engagement holes 18 to be screwed into the screw holes 20.

Also provided are hermetic sealing means 22 to prevent fluid infiltrations into the housing compartment 5. Such sealing means 22 comprise one or more gaskets 23 which are interposed and compressed each between the respective striking surface 17 and bearing surface 19a, when the cover 8 and the box body 2 are mutually fastened by means of the threaded elements.

The sealing means 22 further comprise at least a protective sheath 24 developing inside the box body 2 according to the entire superficial development of the housing compartment 5. Such protective sheath 24 projects from the housing compartment 5 along the entire peripheral development of the access opening 6 to form a lip-shaped sealing portion 24a.

Also provided are one or more fairlead elements 25, suitable to occlude respective through holes 26 obtained through the lateral walls 4 and/or the bottom wall 3 of the box body 2. Each fairlead element 25 presents a series of concentric pre-breaking notches 25a whose purpose is to facilitate the penetration of the fairlead element itself according to a diameter suitable to obtain a sealing action on a cable or on a tube inserted through the fairlead element. Moreover, on the bottom wall 3 of the box body 2 are obtained one or more breakable attachment seats 27, by means of which the box body 2 can be fastened to a supporting wall, with the aid of additional threaded elements.

In correspondence with and around each attachment seat 27 a protective projection 28 develops, whereon is removably engageable a protective plug 29 suitable to cover the attachment seat 27 to prevent any fluids from infiltrating into the box body through the attachment seat itself.

The various components destined to provide the hermetic seal, such as the gaskets 23, the protective sheath 24 defining the lip 24a and the fairlead elements 25 that maintain perfectly closed the respective through openings 26, are realised in the same elastomeric material, obtained from a single piece by means of a co-moulding process with the plastic material whereof the box body 2 is made. As a result of the co-moulding, the aforementioned components destined to provide the hermetic seal are joined to form a single sealing body, incorporating the gaskets 23 integral with the respective bearing surfaces 19a of the blocks 19, the protective sheath 24 as well as the closure elements 25 integral with the box body 2.

The junction box 1 is further provided with sealing means 30 operating between the cover and the box body to indicate any tampering with the components housed in the box 1 or otherwise the unauthorised removal of the cover 8.

More specifically, such sealing means essentially comprise holed flap elements 30a, 30b respectively associated to the box body 2 and to the cover 8 and able to the traversed by a wire sealed with lead or other type of seal suitable for being necessarily broken upon opening the cover itself.

The present invention attains its proposed aims.

The subject junction box presents an improved versatility of use, thanks to the presence both of the snap-on closure means, and of the screw-on closure means.

It should also be observed that the coexistence of these two types of closure means entails no prejudice in terms of the hermetic seal but, on the contrary, is advantageous thereto.

When the cover 8 is fastened through the pressure fastening means alone, the presence of the frangible portions 21 on the cap 9 eliminates all possibility of infiltration through the engagement holes 18.

When, to assure a greater engagement reliability of the cover 8, the screw-on fastening means 13 are employed, fastening the threaded elements determines the compression of the gaskets 23 between the respective striking surfaces 17 and bearing surfaces 19a, hampering any infiltrations in correspondence with the surfaces themselves.

The obtainment of the gaskets 23 in a single piece with the box 1 and with all other components (protective sheath 24, sealing lip 24a, fairlead elements 25) destined to guarantee the hermetic seal, also represents an advantageous aspect for purposes of the hermetic seal, and considerably simplifies the process whereby the box is manufactured.

## Claims

1. Electric junction box comprising:
- a box body (2) presenting a housing compartment (5) and at least an access opening (6), said housing compartment (5) being destined to receive terminations of conductor elements;
- at least a cover (8) removably engageable to the box body (2) in correspondence with the access opening (6) to close the housing compartment (5);
- closure means (11) operating between the box body (2) and the cover (8) to fasten one with respect to the other,
wherein said closure means (11) comprise pressure fastening means (1) and screw-on fastening means (13) to maintain the cover (8) engaged to the box body (2),
**characterized in that** it, further comprises at least a protective sheath (24)
developing within the box body (2) according to the entire superficial development of the housing compartment (5),
wherein said protective sheath (24) is integral to the box body (2), said protective sheath (24) projecting from the housing compartment (5) along the entire peripheral development of the access opening (6) to form a lip-shaped sealing portion (24a),
wherein said protective sheath is co-moulded with said box body.

2. Box according to claim 1, wherein said pressure fastening means (12) comprise:
- at least a projection (14) protruding externally from the box body (2) developing at least in part around said access opening (6);
- at least an overhang (15) protruding internally from a lower peripheral border (10) of the cover (8), said overhang (15) and said projection (14) being able to interact mutually by mechanical interference to determine the snap-on closure of the cover (8) on the box body (2).

3. Box according to claim 1, wherein said screw-on fastening means (13) comprise:
- at least a striking surface (17) situated on the cover (8) and presenting an engagement hole (18) destined to receive a respective threaded element;
- at least an attachment block (19) situated in the housing compartment (5) and presenting at least a bearing surface (19a) whereon a screw hole (20) is obtained, said engagement hole (18) being aligned with said screw hole (20) and said striking surface (17) being pressed against said bearing surface (19a) when the cover (8) and the box body (2) are mutually fastened.

4. Box according to claim 3, wherein said cover (8) further presents at least a frangible portion (21) which occludes said engagement hole (18).

5. Box according to claim 3, further comprising hermetic sealing means (23) associated to the bearing surface, between said striking surface (17) and said bearing surface (19a) to hamper fluid infiltrations into the housing compartment (5).

6. Box according to claim 5, wherein said sealing means comprise at least a gasket (23) co-moulded on the bearing surface (19a) of the attachment block (19).

7. Box according to claim 6, wherein said gasket (23) is integral to said protective sheath (24), said gasket (23) and said sheath (24) being obtained from the same material.

8. Box according to claim 1, wherein said box body presents at least a through opening (26) and at least a fairlead element (25), joined in a single piece with said box body (2) by means of co-moulding, to occlude the through opening (26).

9. Box according to claim 8, wherein said closure element (25) is integral to the protective sheath (24) and is obtained from the same material wherefrom said sheath (24) is obtained.

10. Box according to claim 8, wherein said closure element (25) presents a series of concentric pre-breaking notches (25a).

## Patentansprüche

1. Elektrische Verteilerdose, umfassend:
- ein Dosengehäuse (2), das einen Aufnahmeraum (5) und mindestens eine Zugangsöffnung (6) aufweist, wobei der Aufnahmeraum (5) dazu bestimmt ist, Enden von Leiterelementen aufzunehmen;
- mindestens einen Deckel (8), der am Dosengehäuse (2) im Bereich der Zugangsöffnung (6) abnehmbar in Eingriff kommt, um den Aufnahmeraum (5) zu schließen;
- Schließmittel (11), die zwischen dem Dosenkörper (2) und dem Deckel (8) wirken, um sie miteinander zu verspannen,
wobei die Schließmittel (11) Druckspannmittel (12) und Schraubspannmittel (13) umfassen, um den Deckel (8) am Dosengehäuse (2) in Eingriff zu halten, **dadurch gekennzeichnet, dass** sie überdies eine Schutzhülle (24) umfasst, die sich innerhalb des Dosengehäuses (2) längs der gesamten Oberflächenabwicklung des Aufnahmeraums (5) erstreckt,
wobei die Schutzhülle (24) am Dosenkörper (2) fest liegt, wobei die Schutzhülle (24) aus dem Aufnahmeraum (5) längs der gesamten Umfangsabwicklung der Zugangsöffnung (6) vorspringt, um einen als Lippe (24a) ausgebildeten Dichtabschnitt zu bilden;
wobei die Schutzhülle mit dem Dosengehäuse mitgeformt wird.

2. Dose nach Anspruch 1, bei der die Druckspannmittel (12) umfassen:
- mindestens eine Nase (14), die außen vom Dosengehäuse (2) vorspringt, das sich mindestens teilweise um der Zugangsöffnung (6) herum erstreckt;
- mindestens eine Auskragung (15),die innen vom umlaufenden Unterrand (10) des Deckels (8) vorspringt, wobei die Auskragung (15) und die Nase (14) bereitgestellt sind, durch mechanische Überschneidung zusammenzuwirken, um das schnappartige Schließen des Deckels (8) am Dosengehäuse (2) zu verursachen.

3. Dose nach Anspruch 1, bei der die Schraubspannmittel (13) umfassen:
- mindestens eine Anschlagfläche (17), die am Deckel (8) angeordnet ist und eine Eingriffsbohrung (18) aufweist, die dazu bestimmt ist, ein entsprechendes Schraubelement aufzunehmen;
- mindestens einen Befestigungsblock (19), der im Aufnahmeraum (5) angeordnet ist und mindestens eine Auflagefläche (19a) aufweist, auf der eine Schraubbohrung (20) ausgenommen ist, wobei die Eingriffsbohrung (18) mit der Schraubbohrung (20) ausgerichtet ist und die Anschlagfläche (17) gegen die Auflagefläche (19a) gedrückt wird, sobald der Deckel (8) und das Dosengehäuse (2) miteinander verspannt sind.

4. Dose nach Anspruch 3, bei der der Deckel (8) überdies einen abbrechbaren Abschnitt (21) aufweist, der die Eingriffsbohrung (18) abdeckt.

5. Dose nach Anspruch 3,umfassend überdies hermetische Dichtmittel (23), die zwischen der Anschlagfläche 17 und der Auflagefläche (19a) der Auflagefläche zugeordnet sind, um das Eindringen von Flüssigkeiten in den Aufnahmeraum (5) zu behindern.

6. Dose nach Anspruch 5, bei der die Dichtmittel mindestens eine Dichtung (23) umfassen, die zusammen auf der Auflagefläche (19a) des Befestigungsblockes (19) mitgeformt ist.

7. Dose nach Anspruch 6, bei der die Dichtung (23) an der Schutzhülle (24) festliegt, wobei die Dichtung (23) und die Hülle (24) aus demselben Material bestehen.

8. Dose nach Anspruch 1, bei der das Dosengehäuse mindestens eine Durchgangsöffnung (26) und mindestens ein Kabeldurchgangselement (25) aufweist, die mit dem Dosengehäuse (2) durch Mitformung einstückig vereint ist, um die Durchgangsöffnung (26) abzudecken.

9. Dose nach Anspruch 8, bei der das Schließelement (25) an der Schutzhülle (24) festliegt und aus demselben Material besteht wie die Schutzhülle (24).

10. Dose nach Anspruch 8, bei der das Schließelement (25) eine Reihe von konzentrischen Sollbrucheinschnitten (25a) aufweist.

## Revendications

1. Boîtier électrique de jonction comprenant:
- un corps formant boîtier (2) ayant un compartiment de logement (5) et au moins une ouverture d'accès (6), ledit compartiment de logement (5) étant destiné à recevoir des terminaisons d'éléments conducteurs;
- au moins un couvercle (8) qui peut s'engager de manière amovible au corps formant boîtier (2) au niveau de l'ouverture d'accès (6) pour fermer le compartiment de logement (5);
- des moyens de fermeture (11) agissant entre le corps formant boîtier (2) et le couvercle (8) pour fixer l'un par rapport à l'autre;
dans lequel lesdits moyens de fermeture (11) comprennent des moyens de fixation par pression (12) et des moyens de fixation par vissage (13) pour maintenir le couvercle (8) en engagement avec le corps formant boîtier (2),
**caractérisé en ce qu'**il comprend en outre au moins une gaine de protection (24) s'étendant dans le corps formant boîtier (2) sur tout le développement de surface du compartiment de logement (5),
dans lequel ladite gaine de protection (24) est solidaire du corps formant boîtier (2), ladite gaine de protection (24) faisant saillie du compartiment de logement (5) sur tout le développement périphérique de l'ouverture d'accès (6) à former une portion d'étanchéité en forme de lèvre (24a),
dans lequel ladite gaine de protection est co-moulée avec ledit corps formant boîtier.

2. Boîtier selon la revendication 1, dans lequel lesdits moyens de fixation par pression (12) comprennent :
- au moins une protubérance (14) faisant saillie à l'extérieur à partir du corps formant boîtier (2) se développant au moins partiellement autour de ladite ouverture d'accès (6);
- au moins un ressaut (15) faisant saillie à l'intérieur à partir d'un rebord périphérique inférieur (10) du couvercle (8), ledit ressaut (15) et ladite protubérance (14) étant en mesure d'interagir réciproquement par interférence mécanique pour déterminer la fermeture par encliquetage du couvercle (8) sur le corps formant boîtier (2).

3. Boîtier selon la revendication 1, dans lequel lesdits moyens de fixation par vissage (13) comprennent:
- au moins une surface de butée (17) disposée sur le couvercle (8) et présentant un trou d'engagement (18) destiné à recevoir un élément fileté respectif;
- au moins un bloc de jonction (19) disposé dans le compartiment de logement (5) et présentant au moins une surface d'appui (19a) sur laquelle est obtenu un trou de vissage (20), ledit trou d'engagement (18) étant aligné audit trou de vissage (20) et ladite surface de butée (17) étant pressée contre ladite surface d'appui (19a) quand le couvercle (8) et le corps formant boîtier (2) sont fixés réciproquement.

4. Boîtier selon la revendication 3, dans lequel ledit couvercle (8) présente en outre au moins une portion cassante (21) qui ferme ledit trou d'engagement (18).

5. Boîtier selon la revendication 3, comprenant en outre des moyens de fermeture étanche (23) associés à la surface d'appui, entre ladite surface de butée (17) et ladite surface d'appui (19a) pour empêcher les infiltrations de fluides dans le compartiment de logement (5).

6. Boîtier selon la revendication 5, dans lequel lesdits moyens de fermeture étanche comprennent au moins une garniture (23) co-moulée sur la surface d'appui (19a) du bloc de jonction (19).

7. Boîtier selon la revendication 6, dans lequel ladite garniture (23) est solidaire de ladite gaine de protection (24), ladite garniture (23) et ladite gaine (24) étant fabriquées en utilisant la même matière.

8. Boîtier selon la revendication 1, dans lequel ledit corps formant boîtier présente au moins une ouverture de passage (26) et au moins un élément guide-câble (25) uni d'un seul tenant audit corps formant boîtier (2) par co-moulage, pour fermer l'ouverture de passage (26).

9. Boîtier selon la revendication 8, dans lequel ledit élément guide-câble (25) est solidaire de la gaine de protection (24) et est obtenu de la même matière que ladite gaine (24).

10. Boîtier selon la revendication 8, dans lequel ledit élément guide-câble (25) présente une série d'encoches de pré-rupture concentriques (25a).
